Europäisches Patentamt

European Patent Office

Office européen des brevets

(11) Numéro de publication: **0 308 991**
**A1**

## (12) DEMANDE DE BREVET EUROPEEN

(21) Numéro de dépôt: **88116347.1**

(22) Date de dépôt: **19.12.85**

(51) Int. Cl.⁴: **G01N 21/05**

(30) Priorité: **21.12.84 FR 8419616**

(43) Date de publication de la demande:
**29.03.89 Bulletin 89/13**

(60) Numéro de publication de la demande initiale
en application de l'article 76 CBE : **0 188 955**

(84) Etats contractants désignés:
**AT BE CH DE GB IT LI LU NL SE**

(71) Demandeur: **SOCIETE NATIONALE ELF
AQUITAINE (PRODUCTION)
Tour Elf 2, Place de la Coupole La Défense 6
F-92400 Courbevoie(FR)**

(72) Inventeur: **Baritiu, Georges-Michel
47 Rue du Maréchal Foch
F-78000 Versailles(FR)**
Inventeur: **Gherardi, Jean-Claude
Avenue des Fleurs Lotissement du Plateau
F-64270 Artix(FR)**
Inventeur: **Leconte, Bernard
6 Cité Dufau
F-64170 Artix(FR)**

(74) Mandataire: **Boillot, Marc
SOCIETE NATIONALE ELF AQUITAINE
Division Propriété Industrielle Tour Elf
F-92078 Paris la Défense Cédex 45(FR)**

(54) Cellule de mesure pour photomètre capable de résister à des pressions et températures élevées.

(57) L'invention concerne une cellule de mesure pour photomètre, qui est capable de résister à des pressions et températures élevées. Ladite cellule de mesure se caractérise en ce qu'elle comprend deux cylindres de quartz (102, 202) séparés longitudinalement par un espacement réglable, qui détermine le trajet optique.

EP 0 308 991 A1

# CELLULE DE MESURE POUR PHOTOMETRE CAPABLE DE RESISTER A DES PRESSIONS ET TEMPERATURES ELEVEES.

L'invention concerne une cellule de mesure pour photométre, qui est capable de résister à des pressions et températures élevées.

Ladite cellule de mesure se caractérise en ce qu'elle comprend deux cylindres de quartz séparés longitudinalement par un espacement réglable, qui détermine le trajet optique.

Avantageusement, chacun des deux cylindres de quartz est inséré dans un corps cylindrique, dont le diamètre intérieur correspond au diamètre extérieur du quartz, et est maintenu, d'une part tangentiellement par une douille qui se visse sur ledit corps en coinçant au moins un joint en forme de biseau contre le quartz et l'extrémité dudit corps taillé en biseau en sens inverse, et d'autre part axialement par vissage d'un culot sur un corps principal, ledit culot appliquant un joint annulaire contre la paroi extérieur plane du cylindre de quartz correspondant.

Le corps principal de la cellule est percé respectivement d'un orifice d'entrée et d'un orifice de sortie pour le fluide à analyser, lesdits orifices étant disposés en regard de l'espacement séparant les deux cylindres de quartz.

La cellule selon l'invention est en particulier utilisable pour constituer la cellule de mesure du photomètre employé comme analyseur optique dans le dispositif de régulation de la charge d'amine sur une colonne d'absorption pour la désulfuration des gaz, qui est décrit plus en détail dans la demande de brevet européen N° 85402563 (publication N° 0188955) du 19.12.1985 dont la présente demande constitue une demande divisionnaire.

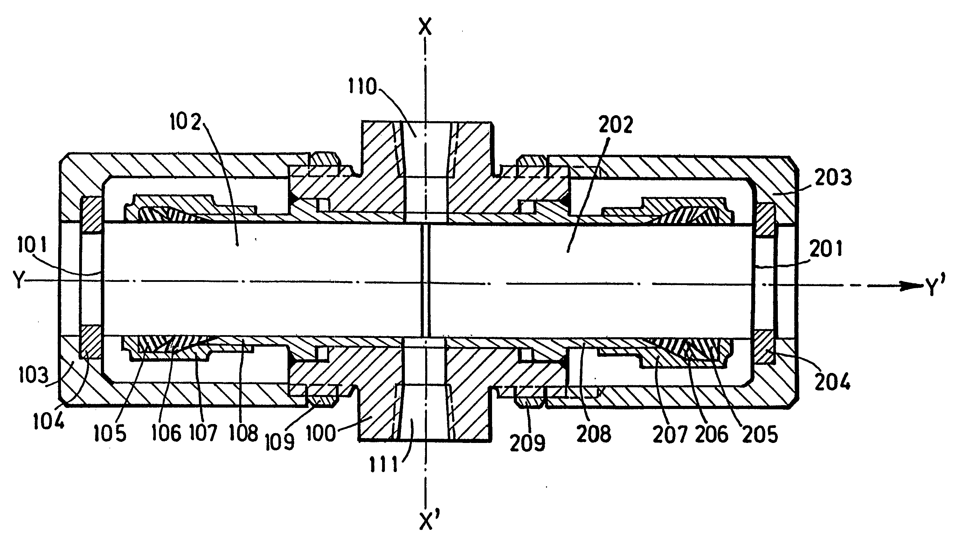

L'invention sera mieux comprise la lecture de la description d'une forme de réalisation non limitative faite en référence au dessin annexé où la figure unique est une vue de détail de la cellule de mesure pour photomètre.

La cellule de mesure pour photomètre représentée sur la figure est symétrique par rapport à un plan passant par l'axe $X'X$ et perpendiculaire à l'axe optique $YY'$. Elle présente également une symétrie de révolution autour de l'axe $YY'$. La cellule comprend deux cylindres de quartz (102) et (202), leur diamètre correspond au diamètre intérieur de deux corps (108) et (208) eux-mêmes emboîtés et soudés dans la cavité cylindrique intérieure d'un corps principal (100). Sur chacun des corps (108) et (208) vient se visser une douille (107) (respectivement (207)) en coinçant contre le cylindre de quartz correspondant un joint (105) (respectivement (205)) et un joint (106) (respectivement (206)) en forme de biseau. La pointe du biseau dudit joint (106) (respectivement (206)) est coincée entre le quartz et l'extrémité du corps (108) (respectivement (208)) qui est taillée en biseau en sens inverse.

De même, la pointe du biseau du joint (105) (respectivement (205)) est coincée entre le quartz et l'autre extrémité du joint (106) (respectivement (206)) qui est taillée en biseau en sens inverse. Ces joints (105) et (106) (respectivement (205) et 206)) sont en polytétrafluoroéthylène (TEFLON® ) et assurent l'étanchéité la pression Ces deux quartz étant positionnés de manière à obtenir le trajet optique voulu (distance inter-quartz), on fixe leur position par serrage des douilles (107) et (207) sur les corps (108) et (208), après introduction d'une cale d'épaisseur convenable par l'un des orifices (110) ou (111). Cette étanchéité est complétée par l'anneau en polytétrafluoroéthylène (104) (respectivement (204)) qui est appliqué contre le fond du cylindre de quartz (101) (respectivement (201)) par vissage du culot (103) (respectivement (203)) sur le corps principal. Ce vissage est rendu indéréglable en bloquant le contre-écrou (109) contre le culot (103).

On obtient ainsi une étanchéité parfaite à la pression et à la température avec un trajet optique aussi court que l'on veut. Le produit à analyser entre par l'orifice (110) d'axe $XX'$ ménagé dans le corps principal, passe entre les deux cylindres de quartz qui déterminent le trajet optique et ressort par l'orifice (111) également d'axe $XX'$.

## Revendications

1 - Cellule de mesure pour photomètre capable de résister à des pressions et températures élevées et se caractérisant en ce qu'elle comprend deux cylindres de quartz (102, 202) séparés longitudinalement par un espacement réglable qui détermine le trajet optique.

2 - Cellule selon la revendication 1, caractérisée en ce que chacun des deux cylindres (102, 202) de quartz est inséré dans un corps cylindrique (108, 208), dont le diamètre intérieur correspond au diamètre extérieur du quartz, et est maintenu, d'une part tangentiellement par une douille (107, 207), qui se visse sur ledit corps en coinçant au moins un joint (105, 106) en forme de biseau contre le quartz et l'extrémité dudit corps taillé en biseau en sens inverse, et d'autre part axialement par vissage d'un culot (103) ou (203) sur un corps principal (100), ledit culot appliquant un joint annulaire (104, 204) contre la paroi extérieure plane (101, 201) du quartz.

3 - Cellule selon la revendication 2 caractérisée en ce que le corps principal (100) est percé respectivement d'un orifice (110) d'entrée et d'un orifice (111) de sortie pour le fluide à analyser, lesdits orifices étant disposés en regard de l'espace séparant les deux cylindres de quartz (102, 202).

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A- 772 967 (NATIONAL RESEARCH DEVELOPMENT) * Pages 1,2 * | 1,2 | G 01 N 21/05 |
| X | US-A-3 886 364 (W. WALKER et al.) * Colonnes 4,5; figures 1,3 * | 1-3 | |
| X | INSTRUMENTS AND EXPERIMENTAL TECHNIQUES, vol. 16, no. 1, partie 2, janvier/février 1973, pages 274-278, Plenum Publishing Corp., New York, US; W. BUUINOWSKI et al.: "Installation for optical investigations under high pressure at liquid-nitrogen temperatures" * Pages 276-277; figure 2 * | 1-3 | |
| X | PATENT ABSTRACTS OF JAPAN, vol. 4, no. 66 (P-11)[548], 17 mai 1980, page 153 P 11; & JP-A-55 35 257 (HORIBA SEISAKUSHO K.K.) 12-03-1980 * Résumé * | 1 | |

DOMAINES TECHNIQUES
RECHERCHES (Int. Cl.4)

G 01 N  21/05
G 01 N  21/03
G 01 N  21/09

Le présent rapport a été établi pour toutes les revendications

| Lieu de la recherche | Date d'achèvement de la recherche | Examinateur |
|---|---|---|
| LA HAYE | 18-01-1989 | BOEHM CH.E.D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................
& : membre de la même famille, document correspondant